# EUROPEAN PATENT APPLICATION

(11) **EP 4 285 794 A2**
(43) Date of publication of application: **06.12.2023**
(21) Application number: 23176515.7
(22) Date of filing: 21.12.2020
(51) Int. Cl.: A47J 31/46

(54) **COFFEE MACHINE, CLOSING AND/OR TAMPING SYSTEM AND VALVE ARRANGEMENT SUITABLE FOR USE IN A COFFEE MACHINE**

(30) Priority: 27.12.2019 EP 19219800
(62) Divisional of application: 20830245.5
(71) Applicant: Koninklijke Philips N.V., 5656 AG Eindhoven (NL)
(72) Inventor: LOOPSTRA, Kasper Roelof, 5656 AE Eindhoven (NL); TIBBE, Tim, Gerard, 5656 AE Eindhoven (NL); KLOKMAN, Pieter, Herman, 5656 AE Eindhoven (NL); ZWART, Bart-Jan, 5656 AE Eindhoven (NL); BAKKER- VAN DER KAMP, Gertrude, Riëtte, 5656 AE Eindhoven (NL); SINNEMA, Anke Gerda, 5656 AE Eindhoven (NL); PANDA, Tara Prasad, 5656 AE Eindhoven (NL)
(74) Representative: Vollering, Stefanus Franciscus Maria

(57) **Abstract**

A coffee machine comprises a water reservoir, water heater, water pump, coffee vessel for receiving ground coffee and a water delivery system having a water delivery head for delivering heated water to the coffee vessel. A closing and/or tamping system is for compacting ground coffee in the coffee vessel by providing relative movement between the water delivery head and the coffee vessel. The closing and/or tamping system comprises a hydraulic actuator, wherein the water outlet from the water pump is coupled to the hydraulic actuator by a first fluid coupling and the water outlet from the water pump is coupled to the water delivery head by a second fluid coupling which includes a passive in-line valve. The passive in-line valve opens when the pressure reaches a desired pressure.

## Description

### FIELD OF THE INVENTION

This invention relates to coffee or espresso machines and to a closing and/or tamping system and valve arrangements suitable for use in such machines.

### BACKGROUND OF THE INVENTION

It is well known that coffee made from freshly ground beans gives better quality than pre-ground coffee. Often, fresh beans are used when making espresso coffee.

There are many different types of commercially available espresso coffee machine, for use in the home, or in bars, restaurants and hotels. The type of machine which is appropriate in a particular setting for example depends on the amount of use, and the budget.

In a manual espresso machine, a user fills a coffee receiving vessel, known as a portafilter, with coffee grounds. The user then needs to tamp the coffee grounds within the portafilter with sufficient pressure, such as around 200N, to create a so-called puck. The portafilter is then mounted to the coffee machine, usually via a bayonet type of connection. Next, the coffee machine drives hot water through the puck in the portafilter and the resulting coffee is dispensed via a spout that is typically integrated in the portafilter. After brewing, the user needs to disconnect and empty the portafilter, throwing away the used coffee grounds.

In a bar setting, the manual process is conducted by a barista. In a domestic setting, the manual steps of the process may make the user feel more involved in the coffee making process, and hence may give the feeling of performing the role of a barista.

There are also manual espresso machines with an integrated grinder. A user switches the portafilter between a first position where it receives ground coffee and a second position where coffee is brewed. Tamping may be done manually or via a manually operated lever.

In a fully automatic espresso machine, all of the above-mentioned steps are done automatically, in one and the same machine. The machine comprises a bean reservoir and a grinder, to make the coffee grounds. These grounds are transported into a brew chamber and tamped automatically, via a piston that may be hydraulically actuated or actuated via an electromotor. Next, hot water is driven through the coffee grounds in the brew chamber, coffee is brewed and dispensed, and the used coffee grounds are discharged from the brew chamber into a waste bin within the machine.

This removes the manual steps required by a manual espresso machine and hence saves time, as well as ensures more uniform results.

A manual espresso machine can be produced at lower cost than a fully automatic espresso machine, since many of the transporting steps do not need to be automated. However, the results may be less uniform, as a result of the user involvement in the filling and tamping process, in particular the user involvement in setting the volume or weight of coffee grounds, and the force and uniformity (straightness) of tamping of the coffee grounds into a puck. A manual espresso machine needs less maintenance since the coffee puck is removed after every brew by the consumer as part of the brewing process.

A fully automatic machine gives more consistent results, but is more costly. It also removes the barista feel of using a manual espresso machine. The fully automatic coffee machine also needs more maintenance (filling of coffee beans, water filing, removing waste water and getting rid of the coffee waste in the waste bin). The fully automatic coffee machine may also be bigger.

A third type of coffee machine has been proposed, which combines elements from the two types described above. This is described in this document as a hybrid espresso machine.

For example, US 9 125 519 discloses a coffee machine with a removable portafilter as used in a manual espresso machine, but which also includes a bean reservoir and a coffee mill for delivering coffee powder to an inserted portafilter. The portafilter functions as the brewing chamber, and a distribution filter (forming a plunger) is used for automatically tamping and thereby compacting the coffee powder in the portafilter before pressurized hot water is delivered to the portafilter.

This hybrid espresso machine thus combines elements from a manual espresso machine and a fully automatic espresso machine. In this type of machine, the user thus only needs to connect the empty portafilter to the machine. The grinding, dosing of the ground coffee in the portafilter, tamping of the ground coffee, hot water delivery and coffee dispensing is then automated as in a fully automatic machine. After brewing, the user needs to disconnect the portafilter and discharge the coffee waste, similarly to the way a manual espresso machine is used.

Some examples in this application may be applied to a manual, a fully automatic and/or a hybrid type of espresso or coffee machine. Other examples relate more specifically to the hybrid type of coffee machine, including a removable portafilter or coffee vessel which functions as the brew chamber, a coffee bean reservoir, a grinder and an automatic tamping provision.

Although a hybrid coffee machine can be much less complex than a fully automatic coffee machine, the closing and/or tamping process still complicates the design of the coffee machine, in particular with a plunger needing to be driven into the mounted portafilter or coffee vessel. There is also a desire to simplify the designs of both manual and fully automatic designs.

### SUMMARY OF THE INVENTION

The invention is defined by the claims.

Examples in accordance with an aspect of the invention provide a coffee machine, comprising:
a water reservoir;
a water heater;
a water pump;
a coffee vessel for receiving ground coffee;
a water delivery system having a water delivery head for delivering heated water to the coffee vessel; and
a closing and/or tamping system for closing the coffee vessel and/or compacting ground coffee in the coffee vessel by providing relative movement between the water delivery head and the coffee vessel;
wherein:
   the closing and/or tamping system comprises a hydraulic actuator;
   the water outlet from the water pump is coupled to the hydraulic actuator by a first fluid coupling; and
   the water outlet from the water pump is coupled to the water delivery head by a second fluid coupling which includes a passive in-line valve, wherein the passive in-line valve is adapted to open when the pressure reaches a desired pressure, e.g. the closing or tamping pressure.

This coffee machine makes use of a water pump both for (brew) water delivery and for pressurization for the closing and/or tamping process. This reduces the component count and thereby reduces the cost. It may also reduce the size of the machine.

A passive in-line valve is a valve that only opens when a desired pressure has been reached. It remains closed as long as the desired pressure has not been reached. The desired pressure can for instance be selected to correspond to the closing pressure, i.e. the pressure needed to close the coffee vessel. If the coffee machine comprises a tamping function, the desired pressure can be selected to correspond to the desired tamping pressure.

Thus, the passive in-line valve may function a s a pressure controlled switch, to automatically switch at the desired pressure between closing and/or tamping on the one hand and coffee brewing on the other hand. In other words, the passive valve opens when the desired pressure, e.g. the desired closing or tamping pressure has been reached. Next, water delivery takes place. The passive in-line valve avoids the need for user interaction to switch at the right moment. It also avoids the need for complex and/or expensive controlled devices, (pressure) sensors, active valves, etc. Yet it allows the use of the same pump, for brewing and closing/tamping. It also allows a pressure control approach which may contribute to reliable and repeatable brew results, because the right tamping and brew pressure will be set automatically, independent of the amount of ground coffee in the coffee vessel and/or the coffee type, grind size, etc.

This concept may be applied to any coffee machine with automated closing and/or tamping functionality, and thus may be applied to manual, fully automated or hybrid type espresso or coffee machines.

In one example, the first fluid coupling may be between the water reservoir or more particularly the water pump, and the hydraulic actuator without passing the water heater. Thus, cold water can be used for closing and/or tamping, which may help to lower the energy consumption of the machine.

The second fluid coupling may be passing the water heater, so that hot water can be used for brewing. The second fluid coupling may for instance be located between the water reservoir, or more particularly the water pump, and the water delivery head. In such case, there may be two parallel passageways from the water reservoir, or more particularly the water pump, only one of which includes the water heater. The water pump is used in both fluid couplings and this shared coupling branches into the two parallel couplings at a branch point, downstream of the water pump but upstream of the water heater.

In another example, the second fluid coupling may be located between the hydraulic actuator and the water delivery head. The heating may then take place between the hydraulic actuator and the water delivery head or, in other words, the water heater may be included in the second fluid coupling downstream of the hydraulic actuator. This helps to avoid cooling of the water during the closing and/or tamping process and may reduce energy usage.

In another example, the branch point of the first and second fluid coupling may be downstream of the water heater. In such case, preferably the water heater is controlled so that cold water is used for closing and/or tamping and hot water is used for brewing.

In all examples, the coffee machine may further comprise a controller. The controller may be adapted to switch off the water heater during actuation of the hydraulic actuator and switch on the water heater during water delivery to the water delivery head. Generally, this may save power. In examples where both the first and second fluid couplings pass the water heater, the controller may prevent heating of the water used for the control of the hydraulic actuator. It may also prevent the water inside the water heater being turned into steam. For instance, if the water heater is kept on while there is no water being passed through, it may become so hot that water that is eventually passed through will reach boiling temperatures, even at high pressure, and turn into steam. Using steam to brew coffee must be avoided because it normally reduces the quality of the coffee. It may also result in steam being blown out of the dispense spout.

The passive valve may have a status detection system, to detect whether the valve is open or closed. In such case, the controller may receive valve status information from the status detection system. This valve status information may be used to control the timing of operation of the water heater and/or the pump and/or other control functions.

The coffee machine may further comprise a stabilizing system adapted to retain the closing and/or tamping pressure during delivery of water to the water delivery head. Thus, a set pressure or brew pressure may be maintained in the coffee vessel (i.e. brew chamber) during brewing.

The stabilizing system may for example comprise a shut-off valve or a mechanical lock.

The water delivery head for example comprises a water distribution disc. The water distribution disc provides an area of water delivery to the ground and possibly compacted coffee. The water delivery head may further comprise a filter. The filter enables the passage of water while also retaining the ground coffee so that it may be compacted.

The water delivery head is for example positionally fixed with respect to a main housing of the coffee machine, and the hydraulic actuator of the closing and/or tamping system is for displacing the coffee vessel relative to the fixed water delivery head thereby to provide closing of the coffee vessel and/or tamping of coffee grounds contained therein.

This feature may advantageously be applied to any coffee machine with a closing and/or tamping system, without the limitations of present claim 1. Therefore, according to an aspect of the invention, a coffee machine may be provided, comprising
a coffee vessel;
a water heater;
a water delivery system having a water delivery head for delivering heated water to the coffee vessel; and
a closing and/or tamping system;
wherein the water delivery head is positionally fixed, e.g. with respect to a housing of the coffee machine, and the closing and/or tamping system comprises a drive arrangement for displacing the coffee vessel or a part of the coffee vessel relative to the water delivery head thereby to provide closing of the coffee vessel and/or tamping of coffee grounds contained in the coffee vessel.

In this way, the coffee vessel is displaced rather than the water delivery head to implement the process of closing the coffee vessel and the tamping process. This means that no movement is needed of fluid passageways in the machine, which simplifies the construction.

Preferably, the displacement of the coffee vessel or part thereof is visible, so that the closing and/or tamping process becomes a visible part of the coffee making process.

The displacement of the coffee vessel or part thereof may be an up and down displacement. This may be a simply linear translation of the coffee vessel towards and away from the static water delivery head. Other displacements are however possible, for example a pivoting movement or even a lateral movement. The drive arrangement may be any suitable drive arrangement, e.g. an electric motor or the hydraulic actuator, described above.

In all examples, the coffee machine may comprise a main housing having an exterior mounting port, wherein the coffee vessel is for removable fitting to the exterior mounting port.

The coffee vessel functions as brew chamber, but is external to the machine (explained further below). It may be filled by the machine (hybrid type machine) or by a user (manual type machine). It is removed and emptied by the user after brewing. The coffee machine may thus be a manual or hybrid machine, as explained above, but with a built-in closing and/or tamping system so that closing and/or tamping can be reliably and repeatably performed, by relative movement between the water delivery head and the coffee vessel. Thus, the critical steps (tamping, brewing and optionally grinding) are automatically performed by the machine. Only the non-critical step of discharging the used coffee grounds needs to be performed manually by a user. As a result, coffee of good, consistent quality can be prepared in a foolproof manner, but with a machine that is less complex and therefore more affordable than a fully automatic espresso machine, because the user discharges the coffee waste himself. There is thus no need for a complex discharge arrangement or automated brew chamber movement.

The coffee vessel for example comprises a filter or filter basket. The coffee vessel may further comprise a support for housing the filter or filter basket. The filter or filter basket may be displaced relative to the support or they may be displaced together.

The support may have a handle. This may assist in the connection of the coffee vessel to the mounting port.

Another option is for the filter or filter basket to be separate from the coffee vessel, for example inserted in the machine housing before the coffee vessel is mounted. Thus, there are different options for the coffee vessel. It defines the brewing chamber and stores the coffee grounds to be compacted and brewed, but may or may not incorporate a filter.

In all examples, the coffee machine may further comprise a bean reservoir and a coffee grinder having a ground coffee outlet.

The drive arrangement, or more particularly, the hydraulic actuator may be adapted to displace the coffee vessel between a first position during delivery of ground coffee below the ground coffee outlet and a second positon with a top of the coffee vessel above the ground coffee outlet during delivery of heated water to the coffee vessel.

In this way, steam rising from the coffee vessel during the brewing process does not flow to the coffee in the grinder and reservoir, thus preserving the freshness of the coffee beans. By providing this function as part of an upward movement of the coffee vessel for the closing and/or tamping process, the movement of the coffee vessel achieves multiple advantages.

The coffee vessel or the drive arrangement may for example physically block or otherwise close the ground coffee outlet during delivery of heated water to the coffee vessel. This provides further isolation of the coffee in the grinder and coffee reservoir from steam produced during brewing.

The abovementioned passive in-line valve with status detection may comprise:
an inlet channel;
an outlet channel;
a valve member between the inlet and outlet channels which is biased to isolate the inlet and outlet channels and is adapted to couple the inlet and outlet channels in response to a pressure present at the inlet channel; and
an integrated valve status detector for providing valve status feedback.

This provides a passive valve for use in a coffee machine hydraulic circuit with an integrated, and hence compact and low cost, valve status detector. This enables the valve status to be monitored, so that control actions may be taken which depend on the valve status.

The passive valve (hereinafter also referred to as passive valve arrangement) may comprise first and second sensor terminals adapted to move together and apart in response to movement of the valve member. This enables a contact sensor or a capacitance sensor to be formed.

The valve member for example comprises a valve membrane between the inlet channel and the outlet channel and having an open state and a closed state, wherein the passive valve arrangement further comprises:
a drive member which is driven along a drive member axis by the bias of a spring, for urging the valve membrane to the closed state, wherein the valve membrane is adapted to move to the open state against the bias of the spring in response to the pressure present at the inlet channel;
a cam on the drive member;
first and second sensor terminals each mounted at a same position along the drive member axis, wherein one of the first and second sensor terminals is adapted to deform or be moved orthogonally to the drive member axis by the cam, thereby to change a spacing between the first and second sensor terminals, wherein the first and second sensor terminals together define the valve status detector.

The cam enables the valve status detector to operate with lateral movement, thereby limiting the space taken up by the detector.

An alternative is a pressure-differential sensor where the sensor pins are moved by two different driving members.

The cam thus provides an external actuator which moves with the valve operation, so that the internal operation of the valve is not compromised by adding the valve status detector. The sensor terminals are outside the fluid paths.

The first and second sensor terminals are each for example mounted at a fixed position along the drive member axis. This provides a compact arrangement.

The first and second sensor terminals are for example adapted to make and break contact by the action of the cam. The valve status detector is thus a contact/noncontact sensor, giving a binary output representing the valve status. An alternative is to provide an analog signal, for example based on a change of capacitance or resistance as a function of displacement.

The first and second sensor terminals are for example adapted to make contact in the open state and break contact in the closed state. The valve is thus normally closed (i.e. in the absence of an inlet pressure). The broken contact provides zero current consumption in this normally closed state, and this also protects the contacts against corrosion.

The first sensor terminal may comprise a contact arm which is biased inwardly to contact the second sensor terminal when the contact arm is not engaged by the cam, and is moved outwardly away from the second sensor terminal, against the bias of the contact arm, when the contact arm is engaged by the cam. The cam thus moves the contact arm against the bias when the tab is pushed outwardly, and the contact arms springs back when the cam is removed.

The first sensor terminal for example comprises a base arm connected to the contact arm by a sprung bend. The cam thus drives the two arms together against the bias of the bend when the tab is pushed outwardly, and the two arms spring apart when the cam is removed. This provides a one-piece component for each sensor terminal. The same terminals may form a male connector at a lateral outer edge of the valve arrangement.

The contact arm may comprise a sloped tab for engagement with the cam to push the contact arm outwardly.

In all examples above, the coffee machine may comprise a controller, adapted to control at least one of:
the heating of water;
the grinding of coffee beans;
the dosing of ground coffee to the coffee vessel;
the displacement of the coffee vessel relative to the water delivery head; and
the delivery of hot water.

Thus, the coffee making process may be fully or partly automated. In particular, the critical steps (tamping, brewing, and optionally grinding) may be automated.

Some examples above make use of an external mounting port for the coffee vessel. The coffee vessel is fitted to the external mounting port and is removable from the mounting port by the user, so the coffee vessel can be considered to be an external part of the coffee machine. By this is meant that the coffee vessel can be fitted to and removed from the main body of the coffee machine manually, and without any tools. The insertion and removal afterwards of the coffee vessel is then a normal part of the process of the user in operating the coffee machine, for each brewing operation.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 shows the general design of a coffee machine to which various embodiments may be applied;
Figs. 2A to 2C show three examples of possible hydraulic circuit;
Fig. 3 shows the steps of a closing and tamping process;
Fig. 4 shows an example of an alternative closing and tamping movement;
Figs. 5 to 8 show how the closing and tamping approach of Fig. 3 is implemented using the hydraulic circuit of Figure 2;
Fig. 9 shows in schematic form a passive valve with a valve status detector;
Fig. 10 shows a passive valve design in more detail;
Fig. 11 shows the sensor terminals.
Fig. 12 shows how contact is made (left image) and broken (right image);
Fig. 13 shows three possible designs for the contact bump in plan view and in cross section;
Fig. 14 shows the cam of the drive member;
Fig. 15 shows a top view of the valve housing and shows the lateral male connector formed by the two sensor terminals;
Fig. 16 shows the male connector in more detail; and
Fig. 17 shows how the sensor terminals are pushed through openings to form the male connector.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

This invention relates in particular to a coffee machine which comprises a water reservoir, water heater, water pump, coffee vessel for receiving ground coffee and a water delivery system having a water delivery head for delivering heated water to the coffee vessel. A closing and/or tamping system is for closing the coffee vessel and/or compacting ground coffee in the coffee vessel by providing relative movement between the water delivery head and the coffee vessel. The closing and/or tamping system comprises a hydraulic actuator, wherein the water outlet from the water pump is coupled to the hydraulic actuator by a first fluid coupling and the water outlet from the water pump is coupled to the water delivery head by a second fluid coupling which includes a passive in-line valve. The passive in-line valve opens when the pressure reaches a desired tamping pressure.

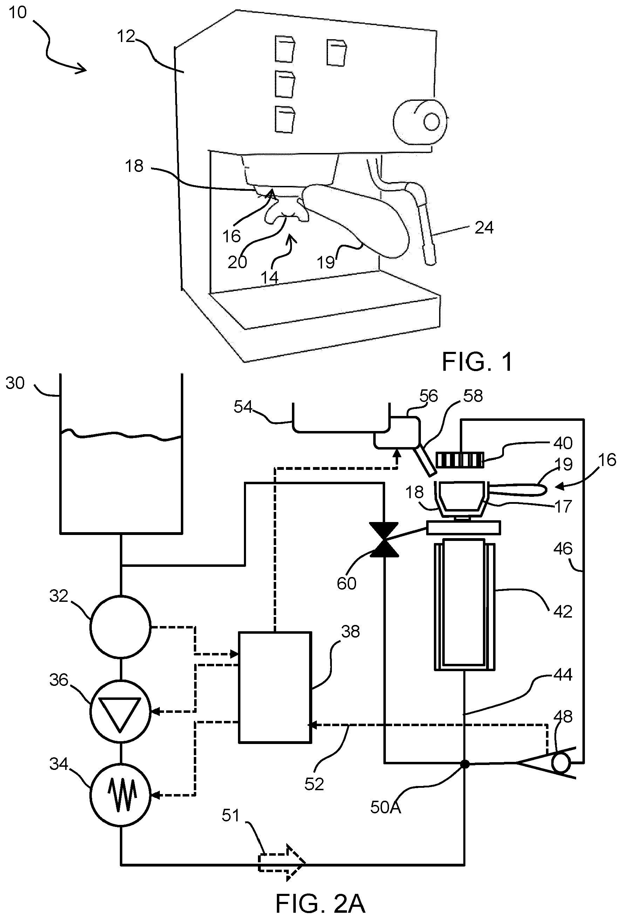

Fig. 1 shows the general design of a coffee machine to which the invention may be applied. The example of Fig. 1 may be a manual espresso machine or a hybrid espresso coffee machine, depending on how the grinding is performed. The invention may alternatively be applied in a fully automatic machine (not shown).

The coffee machine 10 comprises a main housing 12 having an exterior mounting port 14, for receiving a coffee vessel 16. The illustrated machine further comprises a steam nozzle 24.

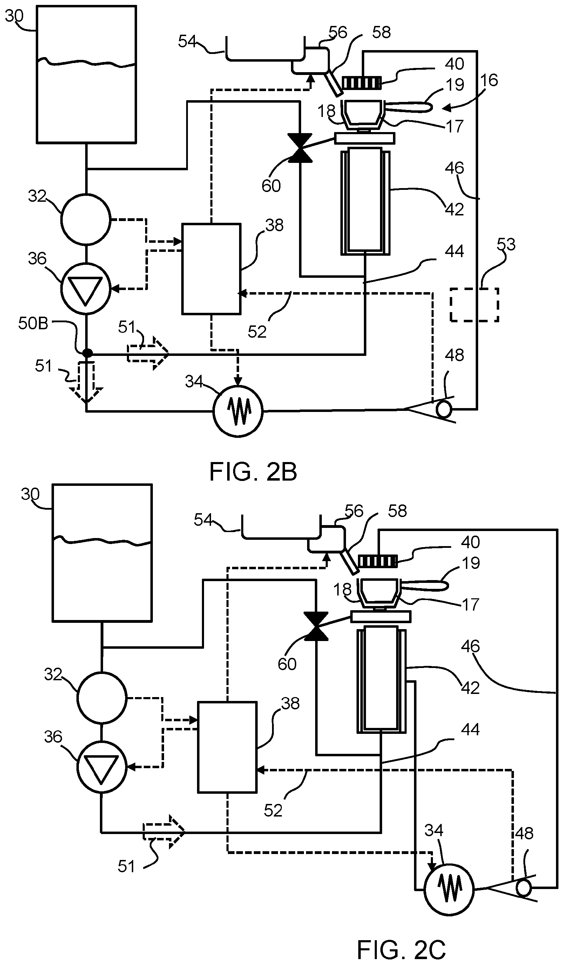

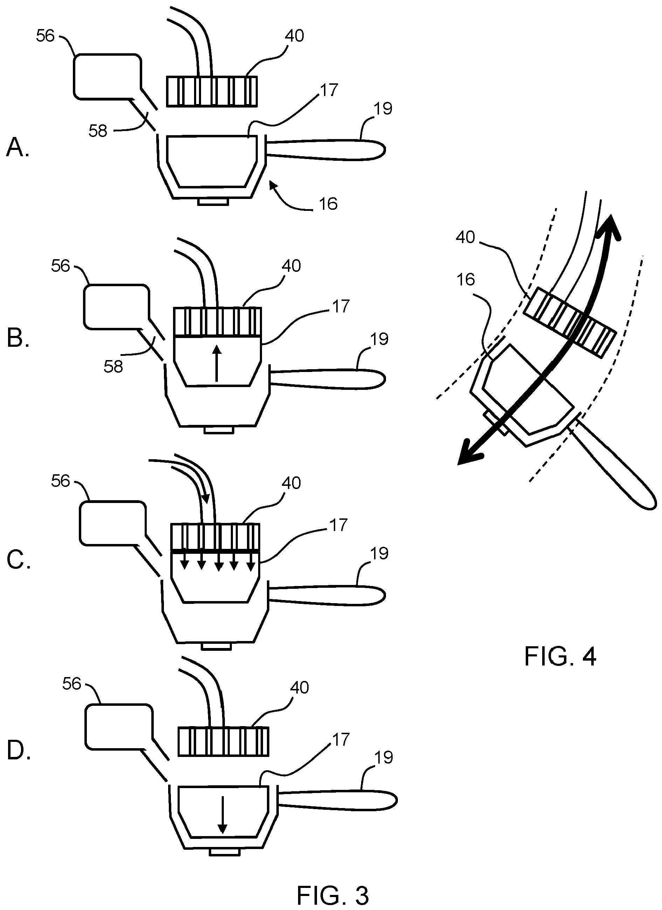

The coffee vessel 16 may comprise a filter or filter basket 17 (see Figs. 2 and 3). It may further include a support 18, for accommodating the filter or filter basket. The coffee vessel 16 may further comprise a lower spout 20 for dispensing brewed coffee. It may further comprise a handle 19. The coffee vessel 16 may thus correspond to a conventional portafilter, as illustrated in the Figures. In use, the coffee vessel 16 may be fitted to the exterior mounting port 14, for example via a bayonet type coupling.

The term "coffee vessel" in this description is used generally to denote a container which is filled with ground coffee and is subsequently closed to form a brew chamber in which the coffee is brewed.

In the case of a manual machine, this brew chamber may be considered to be "external" as it is formed by an external part, i.e. the removable coffee vessel (which may have the form of a conventional portafilter). In the case of a hybrid type machine, the brew chamber may be considered to be at least partly external, because it is formed by an external, removable part. However, the ground coffee is delivered internally. For both machine types, discharging of the puck after brewing is performed externally, by a user. In the case of a fully automatic machine, the brew chamber may be considered to be internal. The coffee vessel is an internal part of the machine, that is not removed before and after each brewing cycle.

The term coffee vessel is intended to cover all of these possibilities, so that the actual item referred to depends on the type of machine being referred to. The coffee vessel will include a part that immediately contains the coffee. This may, for example, include a filter or filter basket.

The main housing 12 contains a hydraulic circuit which provides fluid couplings between a water supply (typically a water reservoir), an internal water heater and a water delivery system having a water delivery head for delivering heated water to the coffee vessel 16.

Figs. 2A to 2C show three examples of possible hydraulic circuit. The same reference numbers are used in the different figures to denote the same components. Figs. 2A to 2C all show examples of hydraulic circuit with an internal grinder but an external coffee vessel, and thus are all suitable for use in a hybrid type coffee machine.

Fig. 2A shows a water reservoir 30, a flow meter 32 (for flow rate and dosing control), a water heater 34, a water pump 36 and a controller 38. The flow meter 32 may provide a flow measurement to controller 38, and the controller 38 may control the heater and pump to perform the coffee brewing process. The water heater may for instance be a flow through heater, e.g. a thermoblock. The flow meter 32 is optional. Dosing and flow rate control may alternatively be done via suitable control of the pump 36 (e.g. power level and pump time).

The water delivery system comprises a fluid passage for delivering heated water to the water delivery head 40, which in turn delivers the heated water to the coffee vessel 16. The water delivery head comprises a water distribution disc. The water distribution disc provides an area of water delivery to the ground coffee. The water delivery head may further comprise a filter that enables the passage of water while also retaining the ground coffee so that it may be compacted during tamping.

A closing and tamping system is provided for compacting the ground coffee in the coffee vessel by providing relative movement between the water delivery head 40 and the coffee vessel 16. This relative displacement closes the coffee vessel to form a closed chamber, i.e. a brew chamber. It furthermore applies force to the ground coffee to perform tamping. In the specific example shown, the relative movement is achieved by moving the coffee vessel 16 rather than by moving the water delivery head 40.

The closing and tamping system includes a hydraulic actuator 42, comprising a piston which is driven by hydraulic pressure. The hydraulic actuator may further comprise a return spring (not shown), to help retracting the piston after brewing.

A water outlet from the water pump 36 is coupled to the hydraulic actuator 42 by a first fluid coupling 44. The water outlet from the water pump is also coupled to the water delivery head 40 by a second fluid coupling 46. The second fluid coupling includes a passive in-line valve 48. The passive in-line valve opens when the pressure at the inlet side of the hydraulic actuator (i.e. at branch point 50A) reaches a desired pressure, e.g. a desired tamping pressure.

Below this pressure, the valve 48 stays closed. There may be hysteresis, so that the valve 48 opens at a first threshold pressure (an opening pressure), but only recloses when a lower second threshold pressure (a closing pressure) is reached. Alternatively, there may be only one threshold pressure.

In this way, the water pump 36 is used for both water delivery for brewing as well as water delivery for closing and tamping. The passive in-line valve 48 switches automatically between these two water delivery functions, without the need for user interaction or electrical actuators. The passive valve 48 opens for instance when a tamping pressure has been reached, i.e. when tamping has been completed. Water delivery then takes place to the water delivery head via the open valve 48. During this water delivery to the water delivery head, the tamping pressure is maintained.

In cases where no tamping of the coffee ground is desired, the same system may be used to merely close the coffee vessel 16. In such case, the passive in-line valve 48 may open when a closing pressure has been reached.

It is also conceivable that closing of the coffee vessel is done via a different mechanism, e.g. manually. In such case, aforementioned system may be used to merely tamp the coffee grounds. The passive in-line valve 48 may then again open when a suitable tamping pressure has been reached, i.e. when tamping has been completed.

The passive valve 48 functions as a pressure controlled system in that it responds to the prevailing pressure. Thus, the closing and/or tamping is reliable and repeatable. By implementing pressure control, the desired closing and/or tamping pressure may be applied to any volume of coffee within the coffee vessel, which is not simple to achieve if position control is employed.

In the example shown in Fig. 2A, the first and second fluid couplings 44, 46 meet at the branch point 50A downstream of the heater 34. Water is routed from the same branch point 50A either to the hydraulic actuator 42 or to the water delivery head 40. To avoid the use of hot water for the closing and/or tamping process, the controller 38 may switch off the water heater 34 during actuation of the hydraulic actuator 42 and switch on the water heater during water delivery to the water delivery head 40.

In order to know when to switch on and off the heater, the passive valve 48 may include a status (open/closed) detection system, and the controller 38 may receive valve status information (open/closed) 52 from the status detection system. A suitable example of a passive valve with a status detection system is described further below. Alternatively, the hydraulic actuator 42 may be provided with a detection means, to distinguish between closing/ tamping on the one hand and brewing on the other hand, e.g. based on a position of the piston inside the hydraulic actuator.

Fig. 2B shows a modification to the hydraulic circuit of Fig. 2A, in which the first fluid coupling 44 is instead between the water reservoir 30 (or more particularly, the water pump 36) and the hydraulic actuator 42 without passing the water heater 34, since hot water is not needed for driving the hydraulic actuator 42. The second fluid coupling 46 is however between the water reservoir 30 (or more particularly, the water pump 36) and the water delivery head 40 passing the water heater 34.

In Fig. 2B, water is thus routed from different points in the hydraulic circuit. The first fluid coupling 44 includes the pump 36 but is between the water reservoir 30 and the hydraulic actuator 42 without passing the water heater 34. The second fluid coupling 46 also includes the pump 36, but is between the water reservoir 30 and the water delivery head 40 and passing the water heater 34. There are thus two parallel fluid couplings from the water reservoir 30, only one of which includes the water heater 34. The water pump 36 is used in both fluid couplings, and this shared fluid coupling section branches into the two parallel fluid couplings at a branch point 50B, downstream of the water pump but upstream of the water heater.

In Fig. 2C, the first fluid coupling 44 is between the water reservoir 30 and the hydraulic actuator 42 without passing the water heater 34, and includes the pump 36. The second fluid coupling 46 is between the hydraulic actuator 42 and the water delivery head 40 and passes the water heater 34. Thus, the two fluid couplings are in series, with one on each side of the hydraulic actuator 42. The pump 36 is in the first fluid coupling 44 and the heater 34 is in the second fluid coupling 46.

Cold water may again be used for closing and/or tamping and hot water may be used for brewing. The heating takes place between the hydraulic actuator and the water delivery head. This avoids cooling of the water during the closing and/or tamping process and reduces energy usage.

As mentioned above, after opening of the valve 48, the closing or tamping pressure needs to be retained during delivery of water to the water delivery head 40. For this purpose a stabilizing system may be used. As will be explained below in further detail, this stabilizing system may comprise various active and/or passive flow components, e.g. a shut-off valve, a mechanical lock, a check valve 51 and/or a flow restriction 53. Further, the area ratio of the piston may play a role, as will be explained below. All stabilizing components may be tuned so as to maintain for instance a desired tamping (or closing) force, whilst allowing sufficient water to flow to and through the brew chamber. Some of the aforementioned valves may be embodied as overpressure valve, to function as safety device and limit the amount of force exerted during closing, tamping and/or brewing.

When water is pumped into the hydraulic actuator 42, the actuator is closed so that pressure can built up and move the piston upward. At the end of the brewing cycle, this water needs to be drained from the actuator to allow the piston to retract. Optionally, a return spring may be provided (not shown) to help the piston retracting.

To drain water from the hydraulic actuator, a return path may be provided between the hydraulic actuator 42 and the water reservoir 30, as shown in Figs. 2A-C. To open or close the return path, a valve 60 may be provided. The valve 60 may for instance comprise an electronic shut-off valve. However, such a valve is relatively expensive. Therefore, preferably, the valve 60 is implemented as a mechanical lock that may be actuated either by a separate handle, or by the action of attaching/ detaching the coffee vessel 16. More particularly, the valve 60 may be closed when the coffee vessel 16 is attached and opened when the coffee vessel is detached. Thus, opening and closing of the valve 60 may be controlled in response to or through a user attaching/detaching the coffee vessel. Since this user action is already a required part of the coffee brewing process anyway, effectively no extra user action is required.

In all examples of Figs. 2A to 2C, in addition to the passive in-line valve 48, there is only one active valve 60. This active valve may be operated by the insertion and removal of the coffee vessel, as described above. The hydraulic circuits of Figs. 2A to 2C may further include one or more passive parts, in particular one or more check valves (one-way valves) 51 and/or flow restrictions 53, as indicated in dotted lines.

The illustrated check valve(s) 51 are arranged to prevent back flow from the hydraulic actuator 42. Such back flow would otherwise allow the piston to lower and the brew chamber to open. Back flow may for instance occur in coffee machines that include a pre-brew step. During such a pre-brew step, the water pump 36 is briefly switched on to dose a small amount of water onto the coffee grounds, then switched off to allow the coffee grounds to bloom, and then switched on again to start the actual brewing process. During the time that the pump is switched off, pressure may drop and back flow from the hydraulic actuator 42 may occur. In the illustrated examples, this is prevented by the check valve(s) 51.

The check valve(s) 51 may also be advantageous in case the area ratio of the piston is sub-optimal, i.e. the ratio between the cross sectional area inside the hydraulic actuator 42 that is subjected to the water pressure supplied by the pump, and the cross sectional area inside the brew chamber, that is subjected to the brew pressure during brewing. If this area ratio is not appropriate, the force exerted on the piston by the brew pressure (and, optionally, the return spring) may be larger than the force exerted on the piston by the water pressure supplied by the pump. By preventing any water exiting the hydraulic actuator 42 by means of a check valve 51 as explained above, it can be avoided that the piston starts retracting. In such case, preferably an overpressure valve may be provided as well, to act as safety valve by avoiding the pressure inside the hydraulic actuator 42 from reaching too high values.

Alternatively or additionally, the area ratio may be optimized. The significance of this area ratio is now explained. During tamping, the ground coffee is compressed. The more the coffee is compressed, the more counter-pressure it generates when water is pumped through. As the entire system is connected to the same pump, an increase in brew pressure (created by the ground coffee as water is forced through) will also increase the pressure in the hydraulic actuator used to tamp the coffee. This causes more force to be exerted on the ground coffee, compressing it further. This, in turn will increase the brew pressure, which increases the tamping pressure, etc. This can lead to the system blocking itself given enough time.

By adjusting the area ratio, a ratio of abovementioned counteracting forces can be adapted, allowing the piston to move slightly during brewing. This is one way to prevent the system from blocking. In such case, preferably a safety lock may be provided as well to prevent the brewing chamber from opening accidentally because of the piston movement.

Alternatively or additionally, a hydraulic restriction (resistance) 53 may be added in the circuit, as illustrated in Fig. 2B in dotted lines. This restriction 53 creates a pressure differential dependent on the amount of water flowing there through. The higher the flow, the higher the pressure differential between the pressure in the brew chamber and the pressure in the hydraulic actuator 42 (with the pressure in the hydraulic actuator 42 being higher). If the piston areas are equal, the force exerted by the water pressure in the hydraulic actuator will become larger than the force exerted by the brew chamber pressure. This would create a net upward movement of the piston, causing the ground coffee to be compressed further. This in turn would cause the pressure in the hydraulic actuator and the brew chamber to increase as the pump needs to work harder to push the water through the ground coffee. As the pumps in a coffee appliance have a lower flow at a higher pressure (and vice versa), increasing the pressure will create a lower flow. As a result, the flow through the restriction 53 will be lower as well, causing the pressure differential and resulting upward force on the piston to decrease. Thus, the flow restriction 53 may help to equalize a pressure differential that may exist over the piston with a given area ratio.

From the above it is clear that the pressures and forces acting on the piston during use, if not balanced well, may cause the brew chamber to open up inadvertently during brewing or cause the piston to provide tamping with such force that no water can pass through the ground coffee, thus blocking the system. The pressures, forces and flow rates prevailing in the system may further depend on the amount of ground coffee in the brew chamber and/or the grind size.

The pressures, forces and flow rates may be balanced by tuning the piston area ratio, the piston return spring force (if present) and/or the size of the restriction 53. Furthermore, check valves 51 may be added to prevent back flow from the actuator.

Figs. 2A to 2C also show a bean reservoir 54 and a coffee grinder 56 having a ground coffee outlet 58. Figs. 2A to 2C thus show a hybrid type design, with an internal coffee grinder and a brew chamber in the form of a coffee vessel 16 which is removably mounted to an external mounting port 14 and is emptied externally by the user as part of the normal operation of the coffee machine.

Fig. 3 shows the steps of the closing and tamping process.

In Fig. 3A, the coffee vessel 16 is illustrated as a portafilter, with a support 18, a filter 17 and a handle 19. The coffee vessel 16 is mounted to the mounting port 14 by the user. Ground coffee is then delivered to the coffee vessel by the grinder 56, which may be controlled by controller 38.

In Fig. 3B, the drive arrangement displaces the coffee vessel 16 towards the water delivery head 40. This provides closing of the coffee vessel and compacting of the ground coffee. As a minimum, the filter 17 is displaced, i.e. the container immediately surrounding the retained coffee, as shown in Fig. 3. However, alternatively, the entire coffee vessel 16 (corresponding to the portafilter in the case of Fig. 3) may be displaced.

The water delivery head 40 may comprise an inlet filter for the coffee vessel and the filter 17 forms or comprises an outlet filter. The tamping is between these two filters. The coffee vessel may even not include a filter, since both filters may be implemented as separate items, for example separately mounted into the main housing of the machine. Thus, many different configurations are possible.

In Fig. 3C the coffee brewing takes place with hot water delivered to the water delivery head 40 under pressure.

In Fig. 3D, the drive arrangement returns the filter 17 to its initial position, so that the coffee vessel 16 can be removed to dispose of the coffee puck.

By displacing the coffee vessel rather than the water delivery head to implement the closing and/or tamping process, no movement is needed of fluid passageways in the machine, which simplifies the construction. In the case where the coffee vessel is visible from the exterior, such as typically is the case in a hybrid and manual espresso machine, the closing and/or tamping process may become a visible part of the coffee making process, because movement of the external coffee vessel may be visible or easily made visible.

In the example shown, the drive arrangement displaces the coffee vessel up and down. This is shown as a simple linear translation of the coffee vessel towards and away from the static water delivery head 40. Other displacements are however possible, for example a pivoting movement or even a lateral movement.

Fig. 4 shows an example of an alternative movement, with a pivoting arrangement. Other displacements are possible, including horizontal as well as vertical.

There is, however, an additional advantage which can be achieved when displacing the coffee vessel up and down. This additional advantage can be seen in Fig. 3, in particular in Figs. 3B and 3C.

The drive arrangement displaces the coffee vessel between a first and second position. The first position is during delivery of ground coffee as shown in Fig. 3A. At this time, the top of the coffee vessel 16 is below the ground coffee outlet 58 so that ground coffee can be delivered under gravity. The second positon is during delivery of heated water to the coffee vessel through the water delivery head as shown in Fig. 3C. At this time the top of the coffee vessel is above the ground coffee outlet 58.

In this way, steam rising from the coffee vessel during the brewing process of Fig. 3C cannot flow to the coffee in the grinder 56 or in the coffee beans reservoir, thus preserving the freshness of the coffee beans. It also prevents blockage which may result from damp coffee beans. The movement of the coffee vessel during closing and/or tamping thus achieves multiple advantages.

The coffee vessel or the drive arrangement may also be adapted to physically close the ground coffee outlet 58 during the delivery of heated water to the coffee vessel through the water delivery head. This provides further isolation of the coffee in the grinder and reservoir from steam produced during brewing.

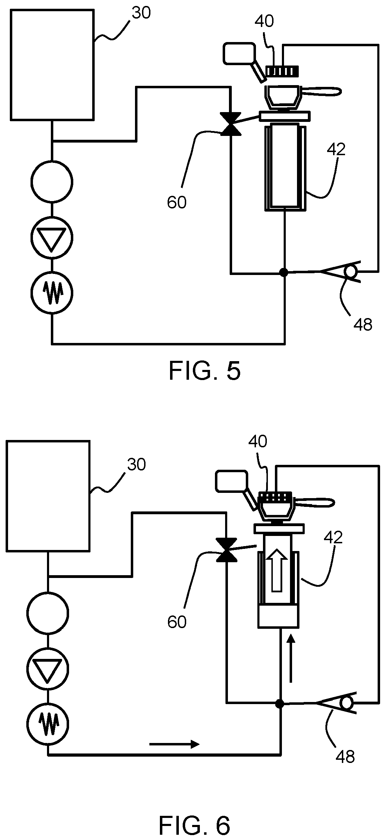

Figs. 5 to 8 show how the closing and tamping step are implemented using the hydraulic circuit of Fig. 2A, simply by way of example.

Fig. 5 shows insertion of the coffee vessel 16. There is no fluid flow in the circuit and valve 60 is closed.

Fig. 6 shows the closing and tamping process. The hydraulic actuator 42 in this example lifts the entire coffee vessel 16. The pump is operated to pressurize the hydraulic actuator 42 but the heater 34 remains turned off. The valve 60 remains closed.

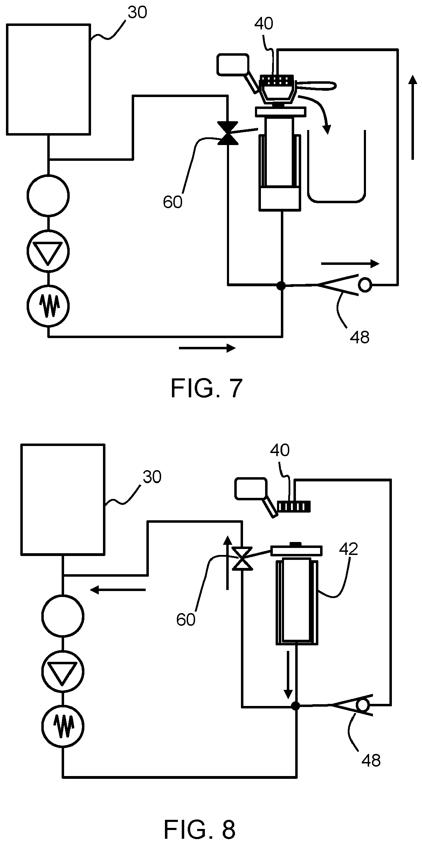

In Fig. 7 the tamping pressure is reached. The passive valve 48 opens, the heater is turned on (e.g. based on detection that the valve 48 has opened) and brewing takes place. A coffee cup is thus filled.

In Fig. 8, the valve 60 is opened. This may be performed as a manual action of the user, for example via a manually operated switch, or by performing an initial step of the removal of the coffee vessel 16, e.g. a rotation in its bayonet coupling, as explained above. Thus, water from the hydraulic actuator 42 can flow back to the water reservoir 30 through valve 60. The draining of the hydraulic actuator causes the piston and coffee vessel 16 to lower and the brew chamber to open. Some water vapor may then escape. This water vapor travels upwards, away from ground coffee residue in the grinder.

Once fully lowered, the coffee vessel may be removed and emptied by the user.

In all of the examples above, the water delivery head 40 is positionally fixed with respect to the main housing 12, and the hydraulic actuator 42 of the closing and/or tamping system displaces the coffee vessel 16 (or part thereof) relative to the water delivery head 40 to provide closing of the brew chamber and tamping. In other examples (not shown), the coffee vessel 16 may be fixed or stationary, and the hydraulic actuator 42 may be arranged to displace the water delivery head 40 or part thereof (e.g. its inlet filter) relative to the coffee vessel 16, to provide closing and/or tamping.

In other examples, the coffee machine may be a manual type coffee machine, without bean reservoir 54 and grinder 56.

In other examples, the coffee machine may be a full automatic type coffee machine, with a coffee vessel that is internally mounted, instead of removably mountable to an exterior mounting port 14.

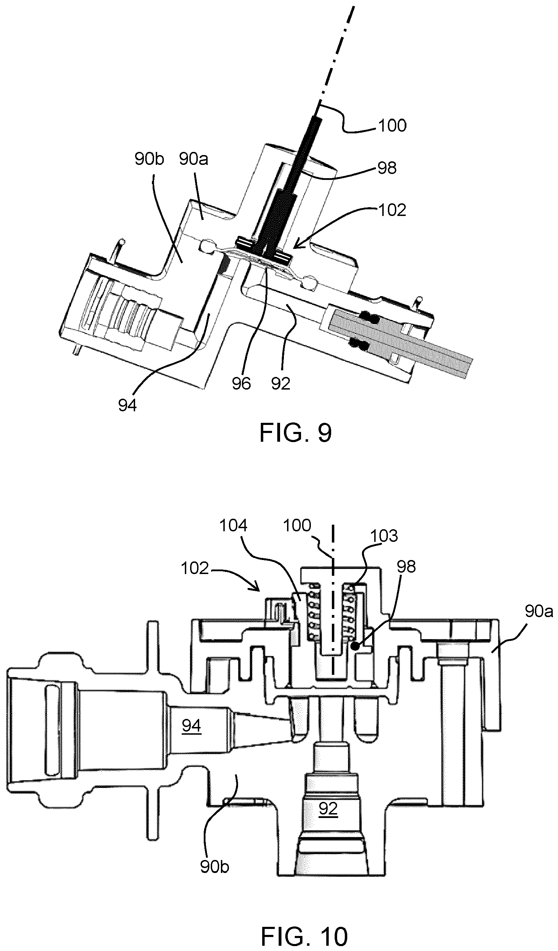

Fig. 9 shows in schematic form a passive valve with a valve status detector suitable for use as valve 48 in the example circuits of Figs. 2A to 2C and 5 to 8.

The passive valve illustrated in Fig. 9 is based on the valve design described in detail in WO 2018/122055.

The passive valve arrangement comprises a housing 90a, 90b which defines an inlet channel 92 and an outlet channel 94.

A valve membrane 96 is arranged between the inlet channel and the outlet channel and has an open state and a closed state. In the example shown, the valve membrane 96 has a disc shape, with the inlet channel 92 opening to a central portion of the valve membrane, and the outlet channel opening to an edge area of the valve membrane.

A drive member 98, in this example formed as a piston, is driven along a drive member axis 100 by the bias of a spring (not shown), for urging the valve membrane to the closed state. The valve membrane moves to the open state against the bias of the spring in response to the pressure present at the inlet channel 92.

To the extent described above, the valve design is as described in WO2018/122055 to which reference is provided.

This design may be modified by the incorporation of a sensing mechanism, which may be based on capacitive measurement, optical detection, or magnetic sensing, based on the bottom and/or top position of the drive member 98. The sensing mechanism is chosen to prevent any significant influence to the valve opening pressure.

One example of suitable modification to the design of WO2018/122055 is to provide first and second sensor terminals, generally shown as 102. In this example, they move together and apart with movement of the drive member 98.

This may be used to provide contact/non-contact sensing to provide a binary detection signal. Alternatively, capacitance measurement may be employed to give a range of detection values for the valve opening distance.

Fig. 10 shows an approach based on contact/non-contact sensing in more detail. The drive member 98 is biased towards the membrane 96 by a spring 103. The drive member has a cam 104 on an outer surface. This is used to engage with the arrangement of first and second sensor terminals.

Each sensor terminal may be mounted at a fixed position along the drive member axis 100. One of the first and second sensor terminals deforms or moves orthogonally to the drive member axis by the action of the cam. This changes a spacing between the first and second sensor terminals.

This provides a passive valve with an integrated compact and low cost valve status detector. This enables the valve function to be monitored, so that control actions may be taken which depend on the valve status, as has been explained above. The cam 104 enables the valve status detector to operate with lateral movement, thereby limiting the space taken up by the detector.

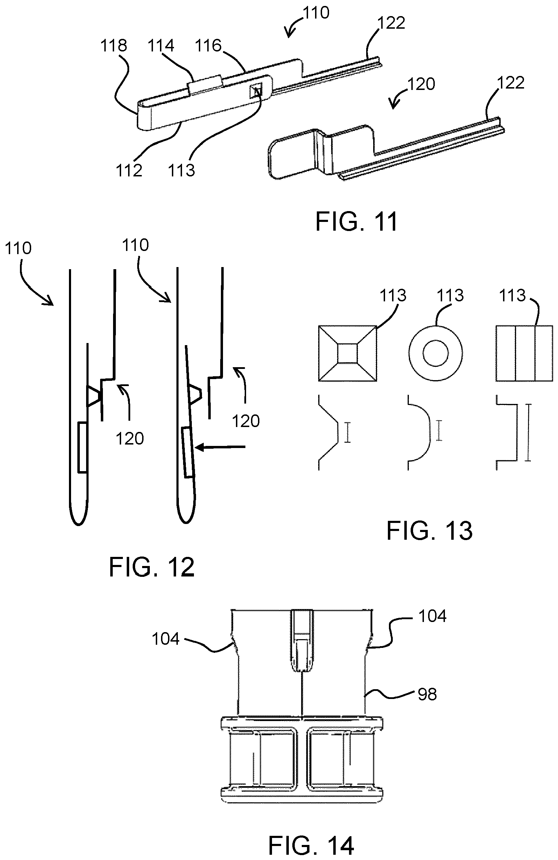

Fig. 11 shows the sensor terminals.

A first sensor terminal 110 comprises a contact arm 112 which is biased inwardly (i.e. towards the axis 100) to contact a second sensor terminal 120 when the contact arm 112 is not engaged by the cam, and is moved outwardly away from the second sensor terminal 120, against the bias of the contact arm, when the contact arm is engaged by the cam. The illustrated contact arm 112 has a contact bump 113 and a tab 114. The cam engages with the tab 114 to move the contact arm against the bias when the tab 114 is pushed outwardly, and the contact arm springs back when the cam is removed.

The first sensor terminal in the example shown comprises a base arm 116 connected to the contact arm 112 by a sprung bend 118. The cam thus drives the two arms 112, 116 of the first sensor terminal together against the bias of the bend when the tab is pushed outwardly, and the two arms spring apart when the cam is removed. This enables a one-piece component for each sensor terminal.

The opposite ends of the sensor terminals 110, 120 form a male connector, with integrated connector pins 122. This male connector is preferably arranged at a lateral outer edge of the valve arrangement.

The first and second sensor terminals 110, 120 make and break contact by the action of the cam 104. The valve status detector is thus a contact/non-contact sensor in this example, giving a binary output representing the valve state. An alternative is to provide an analog signal, for example based on a change of capacitance or resistance as a function of displacement and hence distance between the sensor terminals.

Fig. 12 shows how contact is made (left image) and broken (right image).

Fig. 13 shows three possible designs for the contact bump 113 in plan view and in cross section. It may be a truncated pyramid, a flat-topped hemisphere, or a rectangular ridge. The contact bump may be formed as an indent (which then projects from an opposite side) or by folding.

Fig. 14 shows the cam 104 of the drive member 98. There may be a set of cam elements around the periphery. Only one is needed to engage with the sensor terminals. However, multiple cams enable the drive member to be fitted in different angular positions. The cams may be used as alignment features to ensure one of the cams is correctly aligned with the tab 114 of the first sensor terminal 110. They may also be used as guides so that the angular position of the drive member is fixed when it slides up and down (of course this is only needed if it is circular). For example, a guiding wall in the housing 90a,b may extend between a pair of the cams.

The passive valve is normally closed because in the absence of an inlet pressure, the spring biases the drive member 98 against the valve membrane 96. The drive member is thus driven downwardly (for the orientation used in the figures). This means the cam 104 is engaged with the tab 114 so that the contact between the sensor terminals is broken. This provides zero current consumption of the sensor in this normally closed state of the passive valve.

It also means that the contacts (contact bump 113) are normally separated. When in contact, material corrosion is more rapid. Thus, limiting the amount of contact time limits the corrosion, and limits the amount of design effort needed to ensure corrosion resistance over the device lifetime. For example, a thinner layer of gold or other passivating metal may suffice.

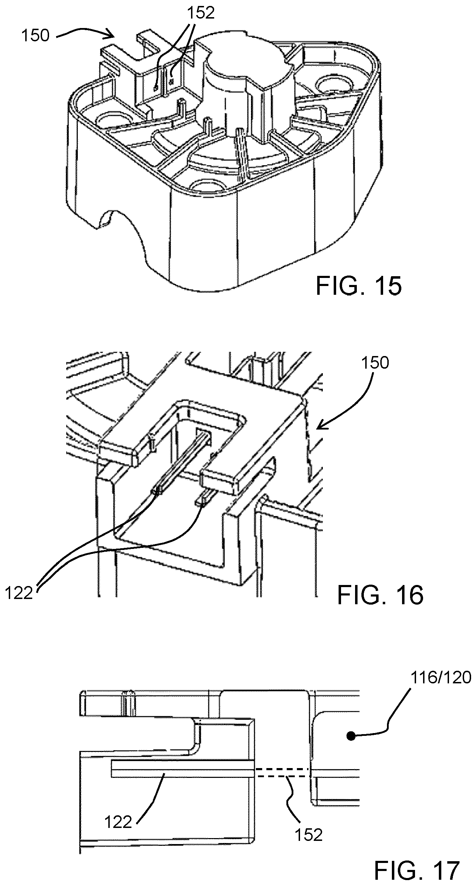

Fig. 15 shows a top view of the valve housing 90a,b and shows the lateral male connector 150 with openings 152 for the connector pins 122 of the two sensor terminals 110, 120. The male connector 150 may for example be a JST connector. A JST connector normally has solid pins. However, the sensor terminals 110, 120 are formed as sheet metal. To enable their ends 122 to function as square contact pins, an L-shaped cross section may be used for the shaft of the terminals 110, 120, as shown in Fig. 11. This resists bending. A flat profile may be used for the arms 112, 116.

Fig. 16 shows the male connector 150 in more detail, with connector pins 122 inserted through the openings 152.

Fig. 17 shows how the ends 122 of the sensor terminals 110, 120 project through the openings 152 to form the male connector.

The description of the hydraulic circuit examples above, and the use of the passive valve, relate to a hybrid type coffee machine. However, many of the concepts above apply also to manual and full automatic type coffee machines.

The following numbered paragraphs provide further disclosure of the present subject matter.
1. A coffee machine, comprising:
   a water reservoir (30);
   a water heater (34);
   a water pump (36);
   a coffee vessel (16) for receiving ground coffee;
   a water delivery system having a water delivery head (40) for delivering heated water to the coffee vessel; and
   a closing and/or tamping system (42) for closing the coffee vessel and/or compacting ground coffee in the coffee vessel by providing relative movement between the water delivery head and the coffee vessel;
   wherein:
      the closing and/or tamping system comprises a hydraulic actuator (42);
      the water outlet from the water pump is coupled to the hydraulic actuator by a first fluid coupling (44); and
      the water outlet from the water pump (36) is coupled to the water delivery head by a second fluid coupling (46) which includes a passive in-line valve (48), wherein the passive in-line valve is adapted to open when the pressure reaches a desired pressure.
2. A coffee machine according to paragraph 1, wherein the first fluid coupling (44) is between the water reservoir and the hydraulic actuator without passing the water heater.
3. A coffee machine according to paragraph 1 or 2, wherein the second fluid coupling (46) is between the water reservoir and the water delivery head and passing the water heater (34).
4. A coffee machine according to any one of paragraphs 1-3, wherein the second fluid coupling (46) is between the hydraulic actuator and the water delivery head.
5. A coffee machine according to paragraph 1, wherein the first and second fluid couplings connect to each other at a branch point (50A) downstream of the water heater.
6. A coffee machine according to any one of paragraphs 1 to 5 further comprising a controller (38), wherein the controller is adapted to switch off the water heater during actuation of the hydraulic actuator and switch on the water heater during water delivery to the water delivery head.
7. A coffee machine according to paragraph 6, wherein the passive valve (48) has a status detection system, and the controller receives valve status information from the status detection system.
8. A coffee machine according to any one of paragraphs 1 to 7, further comprising a stabilizing system adapted to retain the closing or tamping pressure during delivery of water to the water delivery head.
9. A coffee machine according to paragraph 8, wherein the stabilizing system comprises a shut-off valve or a mechanical lock.
10. A coffee machine according to any one of paragraphs 1 to 9, wherein the water delivery head (40) is positionally fixed and the hydraulic actuator of the closing and/or tamping system is for displacing the coffee vessel (16) or part thereof relative to the fixed water delivery head thereby to provide closing of the coffee vessel and/or tamping of coffee grounds contained in the coffee vessel.
11. A coffee machine according to any one of paragraphs 1 to 10, wherein the hydraulic actuator is for displacing the coffee vessel (16) or part thereof up and down.
12. A coffee machine according to any one of paragraphs 1 to 11, comprising a main housing (12) having an exterior mounting port (14), wherein the coffee vessel is for removable fitting to the exterior mounting port.
13. A coffee machine according to any one of paragraphs 1 to 12, wherein the coffee vessel (16) comprises a filter or filter basket and a support (18), and wherein the hydraulic actuator is for displacing the filter or filter basket relative to the support or for displacing the filter basket and the support together.
14. A coffee machine according to any one of paragraphs 1 to 13, further comprising a bean reservoir (54) and a coffee grinder (56) having a ground coffee outlet.
15. A coffee machine according to paragraph 14, comprising a controller (38), which is adapted to control at least one of:
   the heating of water;
   the grinding of coffee beans;
   the dosing of ground coffee to the coffee vessel;
   the displacement of the coffee vessel relative to the water delivery head; and
   the delivery of hot water.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. If the term "adapted to" is used in the claims or description, it is noted the term "adapted to" is intended to be equivalent to the term "configured to". Any reference signs in the claims should not be construed as limiting the scope.

## Claims

1. A coffee machine, comprising:
a water reservoir (30);
a water heater (34);
a water pump (36);
a bean reservoir (54) and a coffee grinder (56) having a ground coffee outlet;
a coffee vessel (16) for receiving ground coffee;
a water delivery system having a water delivery head (40) for delivering heated water to the coffee vessel; and
a closing and/or tamping system (42) for closing the coffee vessel and/or compacting ground coffee in the coffee vessel by providing relative movement between the water delivery head and the coffee vessel;
wherein:
the closing and/or tamping system comprises a hydraulic actuator (42);
the water outlet from the water pump is coupled to the hydraulic actuator by a first fluid coupling (44); and
the water outlet from the water pump (36) is coupled to the water delivery head by a second fluid coupling (46) which includes a passive in-line valve (48), wherein the passive in-line valve is adapted to open when the pressure reaches a desired pressure.

2. A coffee machine as claimed in claim 1, wherein the first fluid coupling (44) is between the water reservoir and the hydraulic actuator without passing the water heater.

3. A coffee machine as claimed in claim 1 or 2, wherein the second fluid coupling (46) is between the water reservoir and the water delivery head and passing the water heater (34).

4. A coffee machine as claimed in any one of claim 1-3, wherein the second fluid coupling (46) is between the hydraulic actuator and the water delivery head.

5. A coffee machine as claimed in claim 1, wherein the first and second fluid couplings connect to each other at a branch point (50A) downstream of the water heater.

6. A coffee machine as claimed in any one of claims 1 to 5 further comprising a controller (38), wherein the controller is adapted to switch off the water heater during actuation of the hydraulic actuator and switch on the water heater during water delivery to the water delivery head.

7. A coffee machine as claimed in claim 6, wherein the passive valve (48) has a status detection system, and the controller receives valve status information from the status detection system.

8. A coffee machine as claimed in any one of claims 1 to 7, further comprising a stabilizing system adapted to retain the closing or tamping pressure during delivery of water to the water delivery head.

9. A coffee machine as claimed in claim 8, wherein the stabilizing system comprises a shut-off valve or a mechanical lock.

10. A coffee machine as claimed in any one of claims 1 to 9, wherein the water delivery head (40) is positionally fixed and the hydraulic actuator of the closing and/or tamping system is for displacing the coffee vessel (16) or part thereof relative to the fixed water delivery head thereby to provide closing of the coffee vessel and/or tamping of coffee grounds contained in the coffee vessel.

11. A coffee machine as claimed in any one of claims 1 to 10, wherein the hydraulic actuator is for displacing the coffee vessel (16) or part thereof up and down.

12. A coffee machine as claimed in any one of claims 1 to 11, comprising a main housing (12) having an exterior mounting port (14), wherein the coffee vessel is for removable fitting to the exterior mounting port.

13. A coffee machine as claimed in any one of claims 1 to 12, wherein the coffee vessel (16) comprises a filter or filter basket and a support (18), and wherein the hydraulic actuator is for displacing the filter or filter basket relative to the support or for displacing the filter basket and the support together.

14. A coffee machine as claimed in any one of claims 1 to 13, comprising a controller (38), which is adapted to control at least one of:
the heating of water;
the grinding of coffee beans;
the dosing of ground coffee to the coffee vessel;
the displacement of the coffee vessel relative to the water delivery head; and
the delivery of hot water.
